# EUROPÄISCHE PATENTSCHRIFT

(11) **EP 3 004 457 B1**
(45) Veröffentlichungstag und Bekanntmachung des Hinweises auf die Patenterteilung: **25.01.2017**
(21) Anmeldenummer: 14725722.4
(22) Anmeldetag: 23.05.2014
(51) Int. Cl.: D21F 3/08, D21G 1/02, F16C 13/00

(54) **WALZE UND HERSTELLUNG EINER WALZENACHSE**
ROLLER, AND PRODUCTION OF A ROLLER AXLE
CYLINDRE ET PRODUCTION D'UN AXE DE CYLINDRE

(30) Priorität: 06.06.2013 DE 102013210496
(43) Veröffentlichungstag der Anmeldung: 13.04.2016
(73) Patentinhaber: Voith Patent GmbH, 89522 Heidenheim (DE)
(72) Erfinder: STEGMANS, Henning, 89231 Neu-Ulm (DE); MÜLLER, Ansgar, 70184 Stuttgart (Ost) (DE); SCHÜTTE, Andreas, 89518 Heidenheim (DE)
(86) Internationale Anmeldenummer: PCT/EP2014/060652
(87) Internationale Veröffentlichungsnummer: WO 2014/195151

(56) Entgegenhaltungen:
- EP-A1- 2 128 338
- DE-A1-102007 006 743

## Beschreibung

Die Erfindung betrifft eine Walze zur Behandlung einer Papier-, Karton-, Tissue- oder einer anderen Faserstoffbahn in einer Maschine zur Herstellung und/oder Veredlung der Faserstoffbahn, mit einem, um eine feststehende, mit Zapfen in Lagerungen gestützte Achse rotierbaren Walzenmantel, welcher von einer Stützeinrichtung auf der Achse bei der Bildung eines Pressspaltes mit einem Gegendruckelement in dessen Richtung gedrückt wird.

Des Weiteren bezieht sich die Erfindung auf eine Herstellung einer Walzenachse.

Solche Walzen bestehen üblicherweise aus einer stationären, axialen Tragkonstruktion (in dieser Anmeldung kurz als Walzenachse oder noch kürzer als Achse bezeichnet), auf der in der Regel als Stützeinrichtung hydraulische Stützelemente positioniert sind, welche wiederum den rotierenden Walzenmantel trotz Presslast im Pressspalt in waagerechter Position halten. Als Stützeinrichtung wird gelegentlich auch eine Druckkammer verwendet, die auf einen Teilumfang des Walzenmantels wirkt. Man bezeichnet solche Walzen als "S-Walzen".

Durch derartige Stützeinrichtungen kann eine über die Faserstoffbahnbreite gleichförmige Last auf die Faserstoffbahn ausgeübt werden. Bei der Anmelderin werden bei derartigen Walzen Walzenmäntel aus unterschiedlichsten Werkstoffen eingesetzt. Es gibt sogenannte harte Walzenmäntel, beispielsweise aus Stahl oder Guss. Diese können zur gleichmäßigeren Verdichtung der Faserstoffbahn auch eine elastische Oberflächendeckschicht tragen. Es sind auch Walzenmäntel bekannt, die aus einem elastischen Kunststoffmaterial hergestellt sind, beispielsweise aus faserverstärkten Harzen. Diese Mäntel sind so flexibel, dass bei Einsatz einer weiteren Walze als Gegendruckelement für die Stützeinrichtung ein dem

Gegenelement angepasster konkaver Schuh vorgesehen werden kann, so dass die Behandlungszone zwischen den Walzen für die Bahn deutlich länger wird als beispielsweise zwischen zwei harten Walzen. Derartige Walzenkonstruktionen haben Vorteile bei der Entwässerung einer Faserstoffbahn oder wenn man nur eine geringe Verdichtung erreichen will. An ihren Enden wird die Achse in der Stuhlung, in Lagergehäusen oder in Supporten fixiert, positioniert und abgestützt. Diese Enden werden im Folgenden allgemein als Zapfen bezeichnet. Die Relativbewegung zwischen rotierendem Mantel und stationärer Walzenachse wird über eine Lagerung ebenfalls im Bereich der Zapfen realisiert.

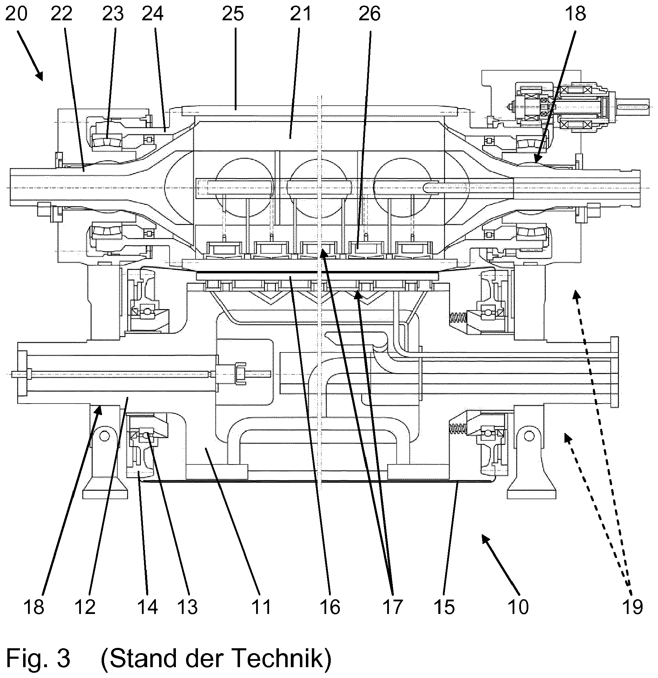

Figur 3 zeigt als Stand der Technik zwei gegeneinander wirkende unterschiedliche Walzen, die jedoch beide dem Gegenstand der Erfindung entsprechen können. Beide Walzen sind mit ihren Zapfen 12, 22 in einer Lagerung in einem Maschinenständer 18 abgestützt. Je nachdem ob die Ober- oder Unterwalze 10, 20 betrachtet wird, ist die jeweils andere Walze das im Anspruch als Gegendruckelement 19 bezeichnete Bauteil. Sie wird deshalb verallgemeinernd als Gegendruckelement bezeichnet, weil man in bestimmten Fällen auch andere Elemente anstelle von Walzen verwendet, beispielsweise umlaufende Stahlbänder oder Bürsten.

Dieser in der Figur 3 dargestellte Stand der Technik stellt als Unterwalze 10 eine von der Anmelderin als "NipcoFlex-Walze" bezeichnete Walze dar. Sie besitzt eine feststehende rotationssymmetrische Achse 11 aus Stahl oder Guss, die einstückig Zapfen 12 aufweist. In Lagern 13 und über rotierende Stützscheiben 14 gehalten, dreht ein flexible Kunststoffmantel 15. In Richtung Oberwalze 20 wirkt als Stützeinrichtung 17 ein hydraulisch betätigter konkav geformter, der Form des Gegendruckelements 19 angepasster Schuh 16. Die Oberwalze 20 ist eine von der Anmelderin als "NipcoP-Walze" bezeichnete Walze. Auch sie besitzt eine Achse 21, an deren Enden die Zapfen 22 angeschweißt sind. Als Stützeinrichtung 17 werden hier einzelne hydraulische Stützelemente 26 verwendet, die hydrody namisch und/oder hydrostatisch gegen den Walzenmantel 25 wirken. Der Mantel 25 ist wiederum über eine Verlängerungen 24 und Lager 23 auf den Zapfen 22 gelagert.

Den bislang bei der Anmelderin verwendeten Walzen ist gemein, dass die Achsen schwer sind, dass es in der Regel sehr schwierig ist, Material wegen der Länge von oft über 10 m ausreichend schnell zu beschaffen und, für den Fall, dass es Schweißverbindungen gibt, die Auslegung der Achsen für die Belastung durch die Presslast zu dimensionieren. Es ist das primäre Ziel der meisten Achsen, das Widerstandsmoment in Richtung der Presslast zu maximieren. Daher werden bei heutigen Achsen auch die klassischen, widerstandsoptimierten Querschnittsformen wie I-, T-, Kasten-, Rohr- oder U-Profil eingesetzt (auch bei NicpoFlex und NipcoP). Die Auswahl einer passenden Querschnittgeometrie ist eher trivial. Komplexer ist die Auslegung des Übergangs vom Mittelteil zu angeschweißten Zapfen.

Um diese Dimensionierung genauer vorzunehmen und auch den Eigenfrequenzen im Betrieb Rechnung zu tragen, sind verschiedene Wege gegangen worden. Eine derartige optimierte Walze ist aus der deutschen Patentanmeldung DE 10 2007 006 743 A1 bekannt.
In der Anmeldung DE 10 2007 006 743 A1 vorgeschlagen, eine Achse die nur in Belastungsrichtung so massiv ausgebildet ist, dass sie das notwendige Widerstandsmoment und somit die notwendige Steifigkeit in Verbindung mit einer hohen Eigenfrequenz in dieser Richtung mitbringt, seitlich über beispielsweise Halbschalen zu versteifen. Dazu werden Versteifungselemente eingesetzt, die die Achse in Querrichtung derart versteifen, dass beim Hochfahren des die Walzen verwendenden Aggregats die Eigenfrequenz der Achse in dieser Richtung unkritisch ist.

Die Achse wird durch die verschmälerte Bauform und die hohlen Versteifungselemente wie gewünscht deutlich leichter.

Es hat sich nun herausgestellt, dass diese eigentlich verbesserte Bauform auch Nachteile mit sich bringt.
Bei einer Gussvariante wird die gesamte Tragkonstruktion aus Gusseisen mit lamellarem Graphit (GJL), Gusseisen mit vermicularem Graphit (GJV) und Gusseisen mit Kugelgraphit, auch Sphäroguss genannt, (GJS) gegossen. Vorteil ist, dass die gewünschte Geometrie aus Zapfen und Mittelteil relativ frei gewählt werden kann. Nachteilig sind dagegen die hohen Kosten für den Guss, sowie die hohen Bearbeitungskosten (Bearbeitung an großem Bauteil / Gussaufmaß / Oberflächenqualität). Außerdem besteht die Gefahr von Gussfehlern, was zu einer aufwändigen Prüfung der Werkstücke verpflichtet und nur eine begrenzte Reparaturmöglichkeit zulässt. Zudem ist die Beschaffbarkeit von großen Gusswerkstücken ist in den letzten Jahren immer schwieriger geworden.

Bei der Stahlvariante, die ebenfalls häufig eingesetzt wird, wird bei Konstruktionen der Mittelteil aus Blechen, Profilen oder Rohren zusammengeschweißt. Vorteil sind zwar die gute Verfügbarkeit und die geringen Kosten für die Rohmaterialien. Zudem ist im Vergleich zum Guss das Angebot an Fertigungsoptionen größer. Der große Nachteil ist allerdings der Aufwand für die Auslegung, die Berechnung und die Herstellung der Schweißverbindung. Die gilt umso mehr, wenn die Schweißnähte in Bereichen mit hoher Belastung liegen, was entsprechend hohe Qualitätsanforderungen an Schweißnaht und Nahtvorbereitung erfordert. Die Rohbleche werden üblicherweise teuer spanend bearbeitet, um die für die hochwertigen Nähte erforderliche Schweißnahtvorbereitung durchzuführen. Es wird oftmals ein Durchschweißen der Schweißnaht gefordert, was ein Ausarbeiten der Schweißnahtwurzel erforderlich macht und hohe Kosten bedeutet.

Deshalb ist es die Aufgabe der Erfindung, eine Walze mit einer neuen Bauform der Achse zu schaffen, die einfacher in ihrer Herstellung ist, aber dennoch ein geeignetes Widerstandsmoment gegen Biegung aufweist.

Erfindungsgemäß wird die Aufgabe bezüglich der Walze dadurch gelöst, dass der mindestens 90% des gewünschten Widerstandsmomentes in Pressrichtung aufbringende Teil der Achse oder die Achse selbst aus einem Blech besteht, dessen Enden zu Zapfen verjüngt worden sind.

Das Blech-Rohteil kann geschmiedet (Schmiedeblech) oder gewalzt (Dickblech) sein, es kann sich auch um eine Bramme handeln. Es beinhaltet im Wesentlichen die gesamte Achsenkontur vom Mittelteil bis zu den Zapfen aus einem Stück. Einen Ausschnitt in dem Blech zu erzeugen, durch den die Zapfenkontur geschaffen wird, ist von der Bearbeitung her deutlich weniger aufwändig als bei herkömmlichen Walzen.
Die Dimensionierung des Querschnitts des Blechs in Pressrichtung wird dabei von der Belastung, insbesondere infolge der Presskräfte im Pressspalt, sowie der Gewichtskraft und der erforderlichen Eigenfrequenz in Pressrichtung bestimmt.

Mit Vorteil weist das Blech eine Dicke von 130 bis 500 mm auf.

Eine solche Blechstärke hat sich je nach Walzendimension als ausreichend erwiesen, ein gewünschtes Widerstandsmoment aufzubringen. Dabei sind die Abmessungen im Querschnitt parallel zur Pressebene größer als die Blechdicke, d. h. senkrecht dazu, um ein ausreichendes Widerstandsmoment aufbauen zu können.

Bevorzugt ist die Querschnittsfläche des Bleches sowohl in der axialen Mitte wie an den Zapfen rechteckig.

Bearbeitungen auf der Drehbank, wie sie früher zumindest an den Zapfen üblich waren, entfallen dadurch vollkommen. Bei dem Begriff "rechteckig" bei einem Bauteilquerschnitt werden die Fasen der Bearbeitung nicht berücksichtigt.

Es ist günstig, wenn die Achse eine Ausdehnung in Pressrichtung wenigstens 2,5 mal, vorzugsweise wenigstens 3 mal größer als quer zur Pressrichtung hat. Entgegen der üblichen runden Ausführung der Achse wird hier ein Querschnitt gewählt, dessen Flächenmomente in den beiden Hauptträgheitsachsen in und quer zur Pressrichtung unterschiedliche, vorzugsweise stark unterschiedlich sind.

Es ist günstig wenn die Form des Zapfens aus dem Blech ausgebrannt oder ausgefräst ist.

In diesem Fall wird als Grundwerkstoff ein Blech für die Achse gewählt, dessen Breite dem Bereich in der Mitte der Walze in Pressrichtung entspricht. Ohne großen Aufwand wird am Ende des Blechs daraufhin der Teil des Bleches, der nicht dem Zapfen vorbehalten ist weggeschnitten. Die Bearbeitung ist einfach, und die zum Teil langen Achsen müssen nicht auf einer Drehbank bearbeitet werden. Durch das "Freischneiden" der Zapfen wird ausreichend Freiraum für die Lagerung des Walzenmantels geschaffen.

Vorteilhaft ist es, wenn eine Lageraufnahme für ein Wälzlager mit rotationssymmetrischer Umfangsfläche an der Achse vorgesehen ist.

Es wird also beispielsweise ein rohrförmiges Bauteil über den rechteckigen Zapfen geschoben und dort beispielsweise zentral mit Schrauben befestigt. Das hat den Vorteil, dass ein Wälzlager auf einfache Weise mit einem an sich rechteckigen Achsquerschnitt verbindbar ist. Das Wälzlager trägt dann direkt oder indirekt

den rotierbaren Walzenmantel. Eine derartige Lagerung des Walzenmantels kann von der Tragkonstruktion selber entkoppelt werden, so dass die Bearbeitung dieses Einzelteils in separaten Arbeitschritten auf kleineren Bearbeitungszentren kostengünstiger erfolgen kann.

Bevorzugt besitzt die Achse seitliche Versteifungselemente.

Diese Versteifungselemente, die bevorzugt in axialer Richtung an das Blech der Achse geschraubt oder geschweißt werden, können angepasst an die Eigenfrequenzen quer zur Pressebene gewählt werden.

Erfindungsgemäß wird die Aufgabe bezüglich der Herstellung einer Walzenachse dadurch gelöst, dass aus einem Blech, das den Hauptbestandteil der Walzenachse darstellt, zur Bildung von Zapfen an den Enden ein Materialausschnitt mittels Fräsen oder Brennen vorgenommen wird.

Nachfolgend soll die Erfindung an mehreren Ausführungsbeispielen näher erläutert werden. In der beigefügten Zeichnung zeigt:
- Figur 1:: eine dreidimensionale Teilansicht einer Achse gemäß der erfindungsgemäßen Walze
- Figur 2:: eine dreidimensionale Teilansicht Seitenansicht einer Achse mit Versteifungselement gemäß der erfindungsgemäßen Walze
- Figur 3:: eine Seitenansicht einer betreffende Walzen enthaltenden Presseinrichtung nach dem Stand der Technik
- Figur 4:: eine Seitenansicht der Achse mit gestrichelter Markierung des Ausschnitts

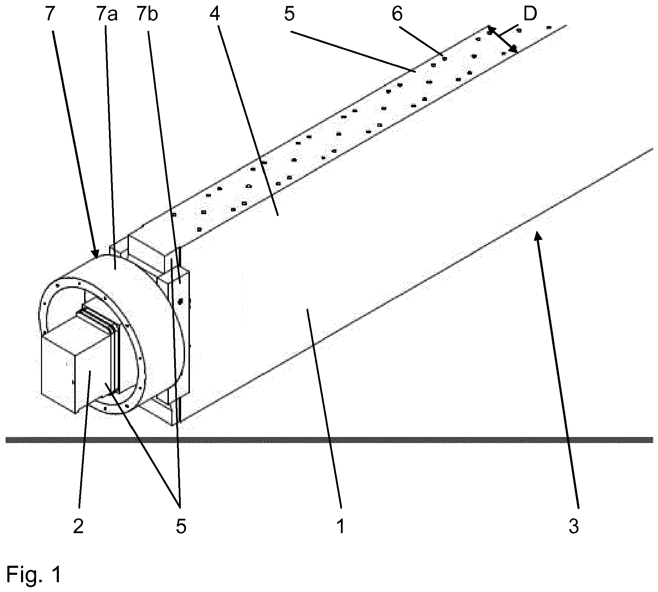

Die in Figur 1 dargestellte Achse 1 für eine durchbiegungsgesteuerte Walze 10, 20 besteht zum weitaus größten Teil aus einem Blech 4 mit einer Stärke von 130 bis 500 mm. Die Achse 1 ist so dargestellt, dass die vertikale Ausrichtung parallel zur Pressrichtung auf die Walze ist. Deshalb ist der rechteckige Querschnitt des Blechs 4 so angeordnet, dass die längere Ausdehnung ebenfalls senkrecht verläuft, um ein möglichst hohes Widerstandsmoment gegen Biegung zu erwirken. Diese senkrechte Ausdehnung des Bleches 4 ist zumindest im mittleren Bereich 3 der Achse 1 mindestens 2,5 mal größer als die Ausdehnung in Querrichtung, welche der Dicke D des Blechs 4 entspricht.

Auf der Oberseite der Achse sind Befestigungsbohrungen 6 angedeutet, mittels derer geeignete Stützeinrichtungen 17 an die Achse 1 anbringbar sind. Diese Anbauteile entsprechen im Wesentlichen denen des Standes der Technik, wie er in Fig. 3 dargestellt ist. Als Stützeinrichtungen 17 sind demnach vorzugsweise hydraulische Einrichtungen einsetzbar, die einzelne hydrostatische oder hydrodynamische Stützelemente 26 aufweisen oder über einen durchgehenden, vorzugsweise zum Gegendruckelement 19 hin konkav geformten Schuh 16 verfügen. Die dargestellte Achse würde entsprechend in eine Unterwalze beispielsweise eines Kalanders oder einer Presse eingesetzt werden. Für eine Oberwalze, in der die Stützeinrichtung nach unten gerichtet ist, muss die Achse um 180° um ihre Längsachse gedreht werden.

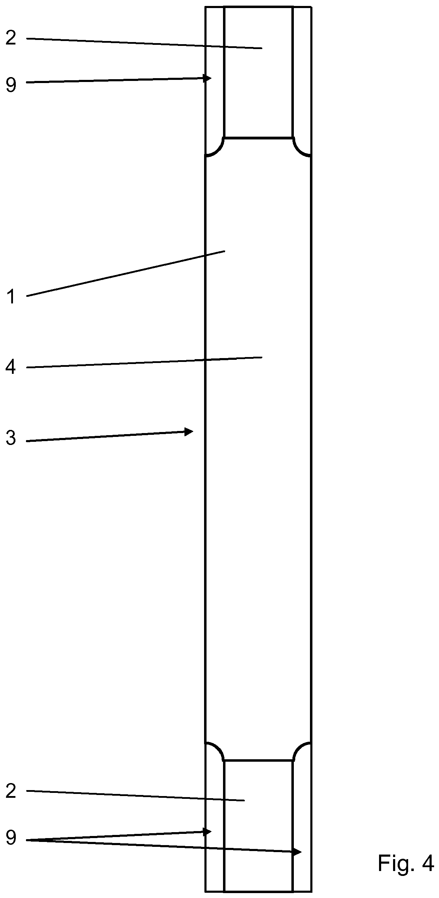

Um die Zapfen 2 zu formen, wurde aus dem Blech 4 an den Enden ein Materialausschnitt 9 vorgenommen, bevorzugt durch Fräsen oder Ausbrennen. Die Fig. 4 deutet an, wo der Materialausschnitt 9 aus dem rechteckigen Blech 4 erfolgt. Der gestrichelte Bereich wird dazu weggebrannt oder weggefräst.

Danach müssen nur wenige Flächen 5, beispielsweise dort, wo die Lageraufnahme 7 angebracht wird oder die Stützeinrichtung 17 befestigt wird, bearbeitet sein.

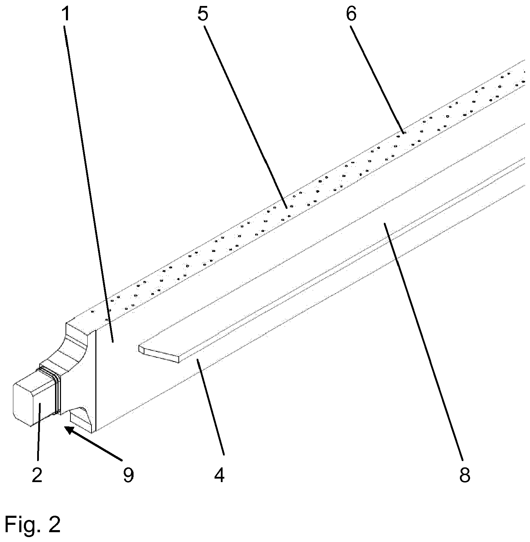

Ergänzend sei mittels Fig. 2, die wiederum eine Achse wie in Fig. 1 darstellt, darauf verwiesen, dass man zur Erhöhung von Steifigkeit in allen Richtungen Versteifungselemente 8 anschrauben oder -schweißen kann. Damit sind die Eigenfrequenzen aller Freiheitsgrade beeinflussbar. Denn infolge der Rotation des Wal-zenmantels 15, 25 kann es zu Schwingungen kommen, die die Stabilität der Konstruktion gefährden. Dabei entspricht die Erregerfrequenz der Frequenz der Mantelumläufe und hängt damit von der Rotationsgeschwindigkeit des Walzenmantels 15, 25 und somit der Maschinengeschwindigkeit ab. Die Schwingungen entstehen insbesondere auf Grund von Unwuchten des Walzenmantels

Insgesamt ist durch die Erfindung eine nahezu einstückige Achse 1, beispielsweise aus geschmiedetem Stahl, die durchaus über 10 m lang sein kann, geschaffen worden, die allen auf sie wirkenden Kräften Stand hält. So kommt es allein schon durch das Eigengewicht zu einer erheblichen Belastung. Hinzu kommen die Presskräfte der Stützeinrichtung 3, welche wie hier bei nach oben gerichteter Stützfläche die Achse 1 gemeinsam mit der Gewichtskraft entgegen der Pressrichtung 6 belasten. Im Ergebnis ist die Belastbarkeit der Achse 1 für diese Kräfte in bzw. entgegen der Pressrichtung am größten. Hier erweist es sich als vorteilhaft, wenn der Querschnitt der Achse über die gesamte Länge rechteckig ist. Bleibt noch die Schwingungsstabilität der Achse 1, welche dann gegeben ist, wenn die Eigenfrequenz außerhalb des Bereichs der Erregerfrequenz liegt, so dass sich keine Resonanzerscheinungen entwickeln können und/oder wenn die Schwingungen gedämpft werden. Dazu werden die Versteifungselemente 8 entsprechend bevorzugt mit mathematischen Methoden ausgelegt.

Da die Achse 1 aus einem rechteckigen Blech 4 gestaltet ist, und auch der Zapfen nach Freilegung durch den Materialabtrag einen rechteckigen Querschnitt aufweist, ist in besonders einfacher Weise eine Lageraufnahme 7 für ein Wälzlager an die Achse 1 angeschraubt. Die Lageraufnahme besteht im Wesentlichen aus einem kurzen Rohrkörper 7a mit Befestigungsblechen 7b. die an der Achse 1 verschraubt werden.

### Bezugszeichenliste:

- 1: Achse
- 2: Zapfen
- 3: Mittlerer Bereich
- 4: Blech
- 5: Bearbeitete Flächen
- 6: Befestigungsbohrung
- 7: Lageraufnahme
- 7a: Rohrkörper
- 7b: Befestigungsblech
- 8: Versteifungselemente
- 9: Materialausschnitt
- 10: Unterwalze
- 11: Achse
- 12: Zapfen
- 13: Lager
- 14: Stützscheibe
- 15: Walzenmantel, Kunststoffmantel
- 16: Schuh
- 17: Stützeinrichtung
- 18: Lagerung in Maschinenständer
- 19: Gegendruckelement
- 20: Oberwalze
- 21: Achse
- 22: Zapfen
- 23: Lager
- 24: Verlängerung
- 25: Walzenmantel
- 26: Hydraulische Stützelemente
- D: Blechdicke

## Patentansprüche

1. Walze zur Behandlung einer Papier-, Karton-, Tissue- oder einer anderen Faserstoffbahn in einer Maschine zur Herstellung und/oder Veredlung der Faserstoffbahn, mit einem, um eine feststehende, mit Zapfen (2) in Lagerungen (18) gestützte Achse (1) rotierbaren Walzenmantel (15, 25), welcher von einer Stützeinrichtung (17) auf der Achse (1) bei der Bildung eines Pressspaltes mit einem Gegendruckelement (19) in dessen Richtung gedrückt wird,
**dadurch gekennzeichnet, dass**
der mindestens 90% des gewünschten Widerstandsmomentes in Pressrichtung aufbringende Teil der Achse oder die Achse (1) selbst aus einem Blech (4) besteht, dessen Enden zu Zapfen (2) verjüngt worden sind.

2. Walze nach Anspruch 1, **dadurch gekennzeichnet, dass** das Blech (4) eine Dicke von 130 bis 500 mm aufweist

3. Walze nach einem der vorhergehenden Ansprüche, **dadurch gekennzeichnet, dass**
die Querschnittsfläche des Bleches (4) sowohl in der axialen Mitte (3) wie an den Zapfen (2) rechteckig ist.

4. Walze nach einem der vorhergehenden Ansprüche, **dadurch gekennzeichnet, dass**
die Achse (1) eine Ausdehnung in Pressrichtung wenigstens 2,5 mal, vorzugsweise wenigstens 3 mal größer als quer zur Pressrichtung hat.

5. Walze nach einem der vorhergehenden Ansprüche, **dadurch gekennzeichnet, dass**
die Form des Zapfens (2) aus dem Blech ausgebrannt oder ausgefräst ist.

6. Walze nach Anspruch 7, **dadurch gekennzeichnet, dass** eine Lageraufnahme (7) für ein Wälzlager mit einer rotationssymmetrischen Umfangsfläche an der Achse (1) vorgesehen ist.

7. Walze nach einem der vorhergehenden Ansprüche, **dadurch gekennzeichnet, dass**
die Achse (1) seitliche Versteifungselemente (8) besitzt.

8. Verfahren zur Herstellung einer Walzenachse,
**dadurch gekennzeichnet, dass**
aus einem Blech (4), das den Hauptbestandteil der Walzenachse (1) darstellt, zur Bildung von Zapfen (2) an den Enden ein Materialausschnitt (9) mittels Fräsen oder Brennen vorgenommen wird.

## Claims

1. Roll for treating a paper, board, tissue, or other fibrous web in a machine for producing and/or finishing the fibrous web, having a roll shell (15, 25) which can be rotated about a stationary axle (1) supported by way of journals (2) in mountings (18), and which is pressed by a supporting device (17) on the axle (1) in the direction of a mating pressure element (19), forming a press nip with the latter,
**characterized in that**
the part of the axle that applies at least 90% of the desired resistance torque in the pressing direction, or the axle (1) itself, consists of a metal sheet (4), the ends of which have been tapered to form journals (2).

2. Roll according to Claim 1,
**characterized in that**
the metal sheet (4) has a thickness of 130 to 500 mm.

3. Roll according to one of the preceding claims,
**characterized in that**
the cross-sectional area of the metal sheet (4) is rectangular both in the axial centre (3) and at the journals (2).

4. Roll according to one of the preceding claims,
**characterized in that**
the axle (1) has an extent in the pressing direction at least 2.5 times, preferably at least 3 times, greater than transversely with respect to the pressing direction.

5. Roll according to one of the preceding claims,
**characterized in that**
the shape of the journal (2) is burned or milled out of the metal sheet.

6. Roll according to Claim 7,
**characterized in that**
a bearing holder (7) for a rolling-contact bearing with a rotationally symmetrical circumferential surface is provided on the axle (1).

7. Roll according to one of the preceding claims,
**characterized in that**
the axle (1) has lateral reinforcing elements (8).

8. Method for producing a roll axle,
**characterized in that**
a material section (9) is cut out by means of milling or burning from a metal sheet (4) that represents the main component of the roll axle (1), in order to form journals (2) at the ends.

## Revendications

1. Cylindre pour le traitement d'une bande de papier, carton, papier-tissu ou d'une autre bande fibreuse dans une machine de fabrication et/ou d'ennoblissement de la bande fibreuse, comprenant une enveloppe de cylindre (15, 25) pouvant tourner autour d'un axe fixe (1) supporté par des tourillons (2) dans des paliers (18), qui est pressée par un dispositif de support (17) sur l'axe (1) lors de la formation d'une fente de pressage avec un élément de contre-pression (19) dans la direction de celui-ci,
**caractérisé en ce que**
la partie de l'axe appliquant au moins 90 % du couple de résistance souhaité dans la direction de pressage, ou l'axe (1) lui-même, se compose d'une tôle (4) dont les extrémités ont été rétrécies vers les tourillons (2).

2. Cylindre selon la revendication 1, **caractérisé en ce que** la tôle (4) présente une épaisseur de 130 à 500 mm.

3. Cylindre selon l'une quelconque des revendications précédentes, **caractérisé en ce que** la surface en section transversale de la tôle (4) est rectangulaire à la fois au niveau du centre axial (3) et au niveau des tourillons (2).

4. Cylindre selon l'une quelconque des revendications précédentes, **caractérisé en ce que** l'axe (1) présente une étendue dans la direction de pressage qui est au moins 2,5 fois, de préférence au moins 3 fois plus grande que transversalement à la direction de pressage.

5. Cylindre selon l'une quelconque des revendications précédentes, **caractérisé en ce que** la forme du tourillon (2) est brûlée ou fraisée dans la tôle.

6. Cylindre selon la revendication 7, **caractérisé en ce qu'**un logement de palier (7) pour un palier à roulement est pourvu d'une surface périphérique à symétrie de révolution au niveau de l'axe (1).

7. Cylindre selon l'une quelconque des revendications précédentes, **caractérisé en ce que** l'axe (1) possède des éléments de rigidification latéraux (8).

8. Procédé de fabrication d'un axe de cylindre,
**caractérisé en ce**
**qu'**une découpe de matériau (9) est effectuée au moyen de fraisage ou de brûlage dans une tôle (4) qui constitue le constituant principal de l'axe de cylindre (1), pour la formation de tourillons (2) aux extrémités.
